# EUROPEAN PATENT SPECIFICATION

(11) **EP 1 762 731 B1**
(45) Date of publication and mention of the grant of the patent: **25.06.2008**
(21) Application number: 06016116.3
(22) Date of filing: 02.08.2006
(51) Int. Cl.: F16B 41/00, F02M 35/00

(54) **Mounting screw retainer structure**
Montage-Schraubenhaltestruktur
Structure de retenue de vis pour montage

(30) Priority: 08.09.2005 JP 2005260084
(43) Date of publication of application: 14.03.2007
(73) Proprietor: HONDA MOTOR CO., LTD., Tokyo 107-8556 (JP)
(72) Inventor: Horiuchi, Tadanori, Minato-ku Tokyo, 107-8556 (JP)
(74) Representative: Rupp, Christian

(56) References cited:
- DE-U1- 8 701 553
- DE-U1- 8 708 965
- JP-A- 63 210 463
- US-B1- 6 419 192

## Description

The present invention relates to a mounting screw retainer structure, and more particularly to a mounting screw retainer structure which can prevent a mounting screw from falling down from a component and can also prevent the interference of the mounting screw with any other related component.

Conventionally known as means for fastening vertically separate components such as an air cleaner box and its cover is the use of a screw, wing nut, band, etc.

Described in Patent Document 1 (JP 2000-104631 A) is means for fastening vertically separate cases constituting an air cleaner box, wherein an elongated bolt is connected to the lower case and the upper end of the bolt inserted through the upper case is tightened by a wing nut. Further, described in Patent Document 2 (JP 10-085539 A) is means using a detachable one-touch fastener or the like for fastening a pleated main filter and a flexible high-porous prefilter in an air cleaner.

However, in such a layout that any other related component is arranged close to the air cleaner box and that the upper space above the air cleaner box is especially narrow, there is a problem such that a screw or the like for fastening the air cleaner box and its cover may erroneously fall down in removing the cover. There is another problem such that if the screw retained by the cover projects therefrom, the screw may interfere with any other related component in removing the cover, causing an increase in number of working steps. Neither suggestion nor consideration is given with respect to these problems in Patent Documents 1 and 2.

Patent document DE 87 08 965 U1 shows a retaining element for screws at elastic bases having a ring shaped snap element to snap in an annular groove of the screw when the screw has been entirely inserted into the base.

Patent document JP 63-210463 shows a cover fitting structure for an article storage box comprising a bolt insertion section having a tapered section formed at the lower end section of the insertion hole, and an O-ring is fitted to the bolt so that when the bolt and a nut are screw-connected, they are reliably sealed by the O-ring.

It is accordingly an object of the present invention to provide a mounting screw retainer structure which can prevent a mounting screw from falling down from a component and can also prevent the interference of the mounting screw with any other related component.

As the first characteristics, in order to attain the above mentioned object, according to the present invention, there is provided a retainer structure for a mounting screw for fastening separate cases, wherein one of the separate cases is formed with a screw hole and a guide, also referred to as upper retaining portion, communicating with the upper end of the screw hole, and the guide has an inner diameter equal to or slightly larger than the diameter of a head portion of the mounting screw, characterized in that a projection is formed on the inner wall of the guide at an upper portion thereof, and that the distance between the projection and the lower end of the screw hole is slightly smaller than the length of a threaded portion of the mounting screw.

Further, as the second characteristics, the projection retains the head portion of the mounting screw in a loosened condition of the mounting screw, and the upper portion of the guide is tapered so that it has an inner diameter slightly smaller than the diameter of the head portion of the mounting screw.

Further, as the third characteristics, the separate cases include a cover and a case constituting an air cleaner box.

Further, as the fourth characteristics, the air cleaner box is located in a narrow space below an air bag module.

According to the invention as defined in claim 1, the mounting screw retainer structure having the projection for retaining the mounting screw in the loosened condition of the mounting screw can be obtained with a simple configuration. Further, the amount of projection of the threaded portion of the mounting screw from the lower end of the screw hole in the loosened condition of the mounting screw is small, so that the lower end portion of the mounting screw does not interfere with any other related component. Accordingly, the number of working steps in removing one of the separate cases from the other or remounting the former to the latter can be reduced.

According to the invention as defined in claim 2, the mounting screw does not fall down even when one of the separate cases is turned upside down in the loosened condition of the mounting screw.

According to the invention as defined in claim 3, the cover as one of the separate cases can be easily removed and remounted in the air cleaner box whose installation space is narrow.

According to the invention as defined in claim 4, the cover of the air cleaner box can be easily removed and remounted in such a layout that an air bag module is installed in a motorcycle and that the air cleaner box is located in a narrow space below the air bag module.
FIG. 1 is a general illustration of a motorcycle using a mounting screw retainer structure according to a preferred embodiment of the present invention.
FIG. 2 is a perspective illustration of the motorcycle according to an embodiment of the present invention.
FIG. 3 is a perspective view showing a mounting structure of an air bag module according to an embodiment of the present invention.
FIG. 4 is a side view of an air cleaner box according to an embodiment of the present invention.
FIG. 5 is a cross section taken along the line A-A in FIG. 1.
FIG. 6 is an illustration similar to FIG. 5, showing a process of removing an upper cover after the condition shown in FIG. 5.
FIG. 7 is an enlarged sectional views illustrating the mounting screw retainer structure according to an embodiment of the present invention.

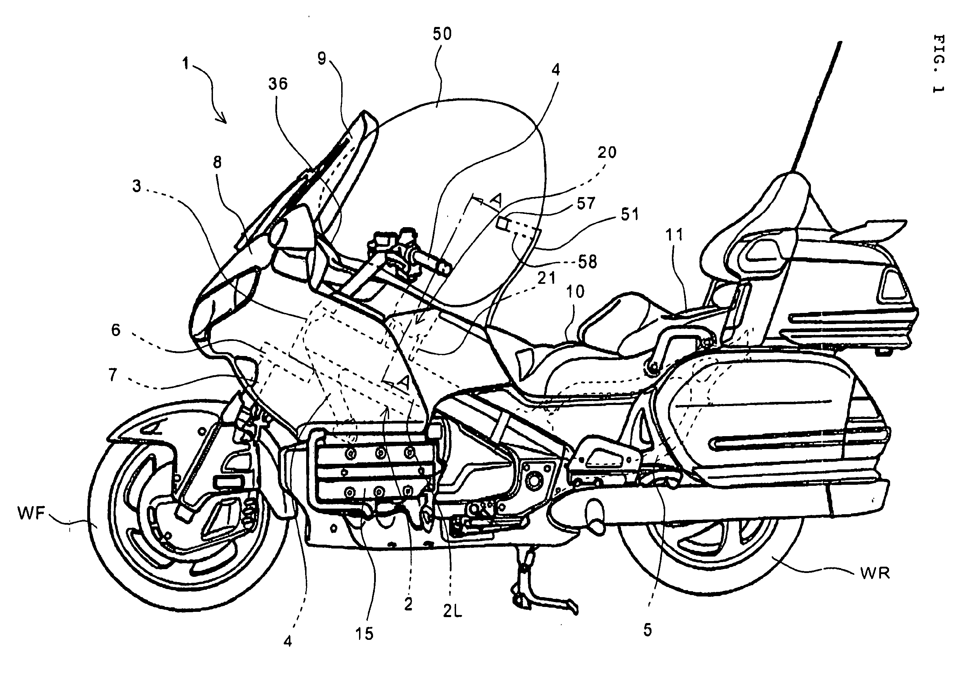

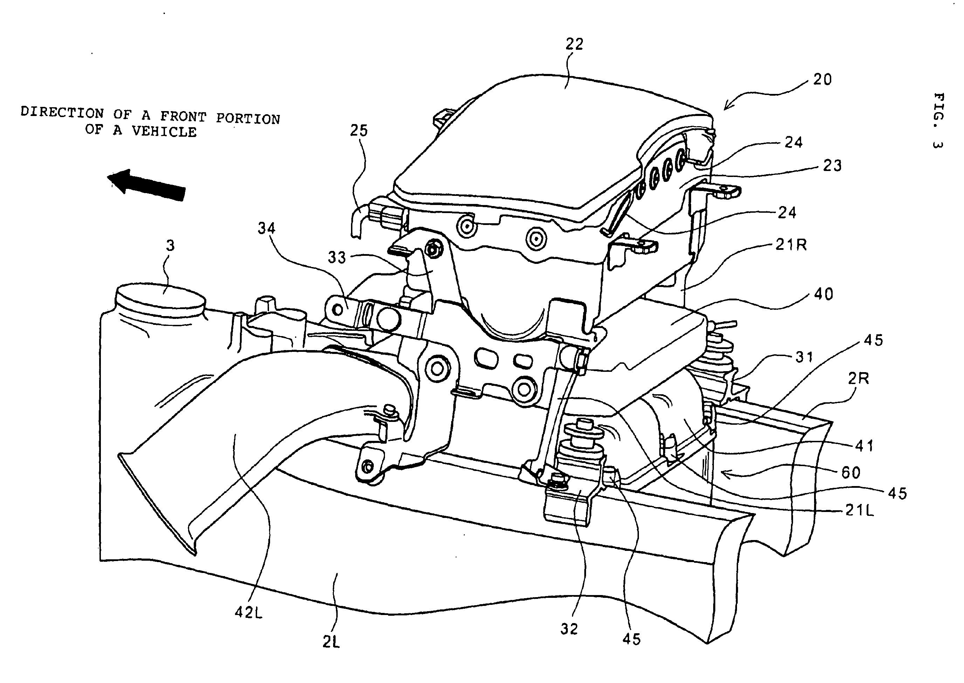

A preferred embodiment of the present invention will now be described in detail with reference to the drawings. FIG. 1 is a general side view of a motorcycle 1 according to a preferred embodiment of the present invention. The motorcycle 1 has a frame 2 composed mainly of a head pipe 3 and a pair of right and left upper tubes 2R and 2L (the right upper tube 2R being shown in FIG. 3) extending rearward from the head pipe 3 so as to be inclined down toward the rear end of the vehicle. A pair of lower tubes 4 extend downward from the upper tubes 2R and 2L at a position near the head pipe 3, and an engine 15 as a driving source is fixedly hung from the lower ends of the lower tubes 4. A pair of right and left front forks 7 steerable by a handle 4 are pivotably mounted through a lower bracket 6 to the head pipe 3, and a front wheel WF is rotatably supported through its axle to the lower ends of the front forks 7. A seat frame 5 for supporting a main seat 10 and a rear seat 11 is connected to a rear portion of the frame 2. Further, a swing arm (not shown) is pivotably connected to the frame 2, and a rear wheel WR as a drive wheel is rotatably supported through its axle to the rear ends of the swing arm.

The motorcycle 1 according to this preferred embodiment is provided with an air bag 50 adapted to be inflated into a substantially spherical shape having such a size as to cover the upper side of the main seat 10 and to touch a meter case 36 and the vicinity of a windscreen 9 provided at the upper end of an upper cowl 8 in the event that an impact greater in level than a predetermined value is applied to the vehicle body. An air bag module 20 including the air bag 50 and an inflator (not shown) for generating a gas for inflating the air bag 50 is fixed through a pair of supporting stays 21 to the upper tubes 2R and 2L at positions on the front side of a rider seating position on the main seat 10 in the longitudinal direction of the vehicle. These fixed positions of the air bag module 20 are set between a meter cover (not shown) located above the head pipe 3 and the main seat 10.

The inflation of the air bag 50 is performed in this manner. The gas generated from the inflator is instantaneously supplied to the air bag 50 folded in the air bag module 20. As a result, a plurality of weak portions formed on three side surfaces of the air bag module 20 having a boxlike shape are broken by the pressure of this gas supplied to the air bag 50, thereby inflating the air bag 50. A pair of supporting belts 51 are connected at their upper ends to a rear portion of the air bag 50, so as to keep the air bag 50 at a proper position in restraining the rider. The lower ends of the supporting belts 51 are firmly secured to a vehicle body member at a position below the main seat 10.

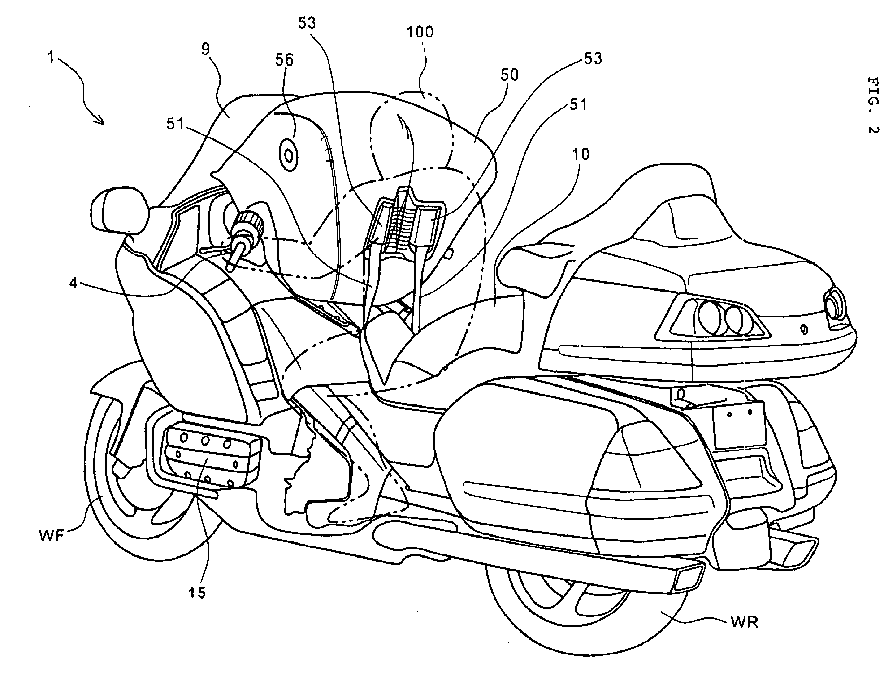

FIG. 2 is a perspective view of the motorcycle 1 at the time the air bag 50 is inflated. The rear surface of the air bag 50 in its inflated condition as opposed to the rider is formed as a substantially V-shaped surface as viewed in plan, so as to effectively embrace the rider. The air bag 50 in its inflated condition is supported not only by the supporting belts 51, but also by the whole of members located below front and lower portions of the air bag 50, including the handle 4 and the meter case 36. Further, the right and left side surfaces of the air bag 50 at its upper portion are formed with a pair of vent holes 56 (e.g., φ 45) for discharging the gas from the air bag 50 at a proper speed under the condition where the rider is being restrained by the air bag 50.

FIG. 3 is a perspective view showing a mounting structure of the air bag module 20. In FIG. 3, the same reference numerals as those shown in FIGS. 1 and 2 denote the same or like parts. The air bag module 20 has a casing 23, and the right and left supporting stays 21R and 21L are welded to the casing 23 at its lower portion. Further, a plurality of supporting members 30 (not shown), 31, and 32 are welded to the upper tubes 2R and 2L, and the supporting stays 21 R and 21 L are fixed to the supporting members 30, 31, and 32 by given bolts. A connector 25 is provided on the front surface of the casing 23, so as to input an ignition signal to the inflator accommodated in the casing 23. The casing 23 is covered by a substantially rectangular module cover 22 adapted to be pivotably opened about its front side at the time of inflation of the air bag 50.

An air cleaner box 60 for cleaning the outside air to be introduced into the engine 15 and the upper cover 41 of the air cleaner box 60 is located so as to be interposed between the upper tubes 2R and 2L, and a substantially flat box-shaped audio unit 40 is located above the air cleaner box 60. A third supporting stay 33 is connected between the casing 23 and the upper tube 2L. Fixed to the third supporting stay 33 are an FI unit supporting stay 34 for fixing a fuel injection control (FI) unit (not shown) and a left air duct 42L for introducing the outside air into the air cleaner box 60 from a front side of a vehicle. Further, the rear surface of the casing 23 opposed to the rider is formed with a pair of slits 24 for passing the supporting belts 51.

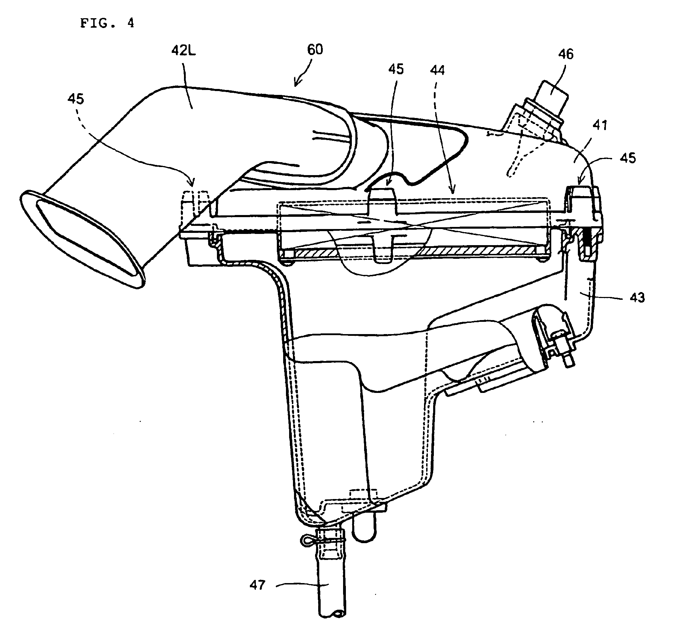

According to the mounting structure of the air bag module 20, the space below the air bag module 20 as formed as the result of the optimum location of the air bag module 20 can be effectively used as an installation space for other components, so that the volume of the installation space for the air bag module 20 can be reduced. Further, by removing the FI unit supporting stay 34 and the third supporting stay 33 in the mounted condition shown in FIG. 3, the audio unit 40 and an upper cover 41 of the air cleaner box 60 can be removed from the left front side of the vehicle without displacing or removing the air bag module 20. Accordingly, the maintenance of the air cleaner box 60 including the replacement of a substantially flat box-shaped air filter 44 (see FIG. 4) accommodated in the air cleaner box 60 can be easily performed.

FIG. 4 is a side view of the air cleaner box 60 according to the present invention. In FIG. 4, the same reference numerals as those shown in FIGS. 1 to 3 denote the same or like parts. The air cleaner box 60 includes the upper cover 41 to which the left air duct 42L is connected, a lower case 43 extending downward and having a lower end portion provided with a drain hose 47, and the substantially flat box-shaped air filter 44 provided between the upper cover 41 and the lower case 43. The upper cover 41 and the lower case 43 are fastened together by eight fastening portions 45. The upper cover 41 and the lower case 43 are formed of synthetic resin having elasticity, and a packing is provided along a joining portion between the upper case 41 and the lower case 43 to seal the joining portion. Further, the intake temperature sensor is provided on an upper surface of the upper case 41. The mounting screw retainer structure according to the present invention is applied to each fastening portion 45 for fastening the upper cover 41 and the lower case 43.

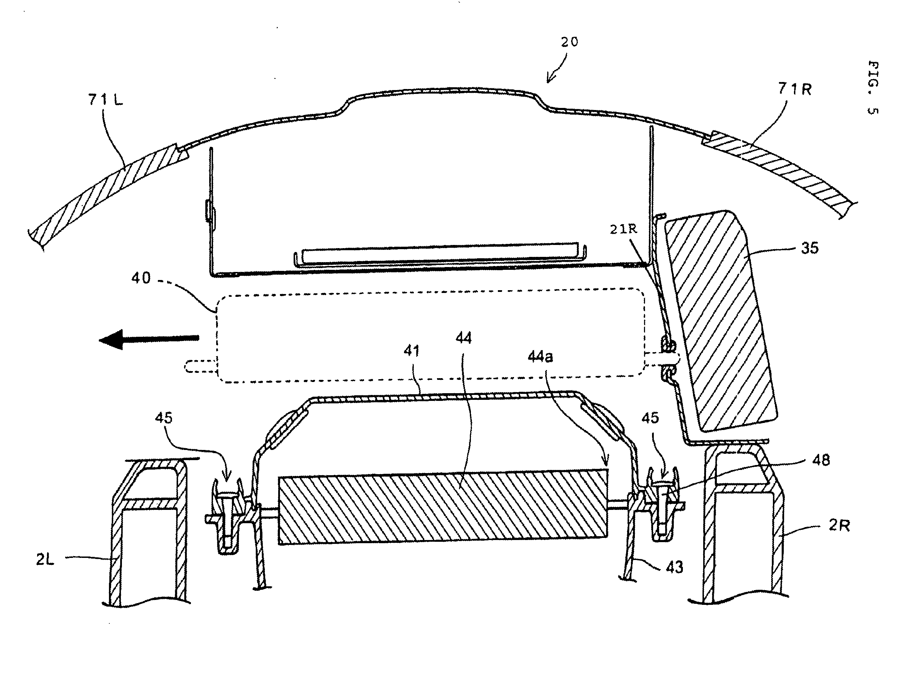

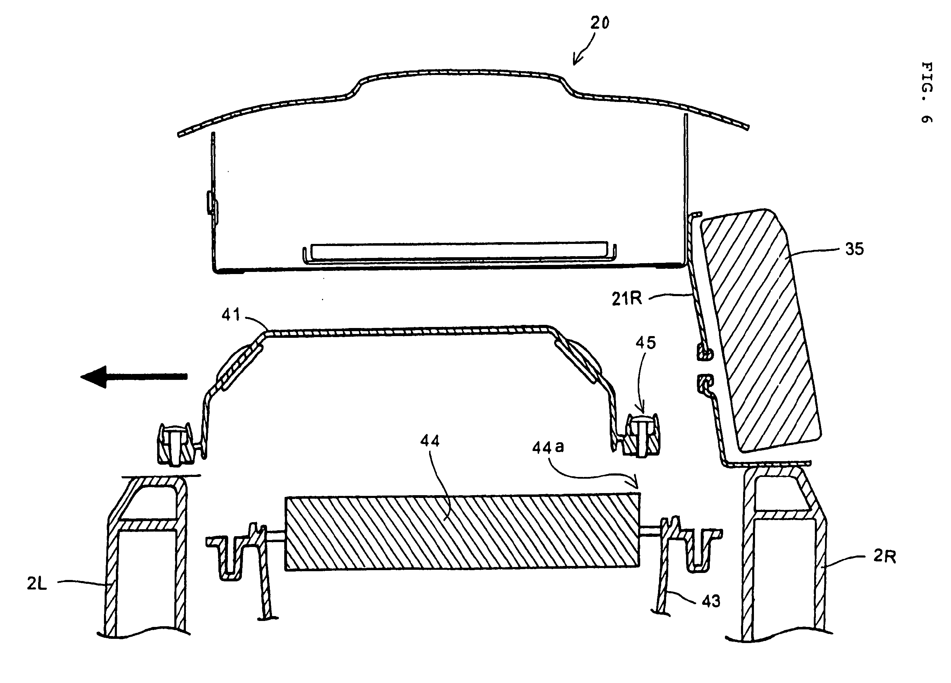

FIGS. 5 and 6 are a cross section taken along the line A-A in FIG. 1. In FIGS. 5 and 6, the same reference numerals as those shown in FIGS. 1 to 4 denote the same or like parts. As mentioned above, the air bag module 20 is supported by the right supporting stay 21 R and the left supporting stay 2 1 L (see FIG. 3) respectively fixed to the upper surfaces of the right and left upper tubes 2R and 2L. Further, an air bag ECU 35 for controlling the inflating operation of the air bag 50 according to information from various sensors for measuring an impact etc. applied to the vehicle body is mounted on the right supporting stay 21 R.

FIG. 5 shows a condition where the audio unit 40 has been removed from the state shown in FIG. 3. In this condition, the upper cover 41 can be removed in the direction shown by an arrow after loosening a plurality of mounting screws 48 in the fastening portions 45. However, the space between the upper cover 41 and the air bag module 20 is small, and the space between the right supporting stay 21 R and the upper cover 41 enough for a worker's hand to insert is also confined, so that there is a high possibility that the worker may erroneously drop the mounting screws 48 in loosening them. If the worker has dropped the mounting screws 48, the worker must recover the mounting screws 48 from the gap between parts arranged concentratedly, causing an increase in number of working steps. Further, if the lower end of each mounting screw 48 projects from the bottom surface of the upper cover 41 after loosening the mounting screws 48 to such a condition where the upper cover 41 can be removed, there is a possibility that the lower end of each mounting screw 48 may interfere with a corner portion 44a of the air filter 44, for example, so that the upper cover 41 may not be smoothly removed. The mounting screw retainer structure according to this preferred embodiment can solve these problems as shown in FIG. 6.

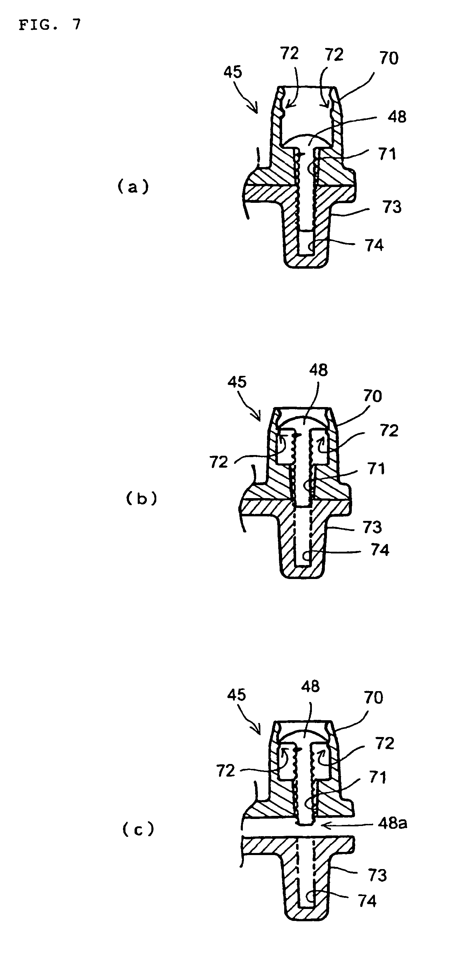

FIGS. 7(a) to 7(c) are enlarged sectional views illustrating the mounting screw retainer structure according to this preferred embodiment. In FIGS. 7(a) to 7(c), each fastening portion 45 is shown, wherein it is composed of an upper retaining portion 70 formed as a part of the upper cover 41, a lower retaining portion 73 formed as a part of the lower case 43, and the mounting screw 48 for fastening the upper retaining portion 70 and the lower retaining portion 73. Each mounting screw 48 used in this preferred embodiment is a tapping screw capable of tapping by itself.

FIG. 7(a) shows a condition where the mounting screw 48 is tightened to fasten the upper and lower retaining portions 70 and 73. The upper retaining portion 70 has an upper screw hole 71, and the lower retaining portion 73 has a lower screw hole 74. The upper screw hole 71 is larger in diameter than the lower screw hole 74. The lower screw hole 74 has a diameter slightly smaller than the diameter of the threaded portion of the mounting screw 48, so as to allow the tapping with the threaded portion of the mounting screw 48. Accordingly, the threaded portion of the mounting screw 48 is loosely inserted through the upper screw hole 71, and a tightening force for fastening the upper and lower retaining portions 70 and 73 is produced between the lower screw hole 74 and the head portion of the mounting screw 48. The mounting screw retainer structure according to this preferred embodiment is characterized in that the upper retaining portion 70 has a cylindrical guide formed around the upper screw hole 71 so as to allow the head portion of the mounting screw 48 to move upward along the inner wall of this cylindrical guide and that a projection 72 is formed on the inner wall of this cylindrical guide.

FIG. 7(b) shows a condition where the mounting screw 48 is loosened to a predetermined position. The projection 72 is formed at such a position that when the mounting screw 48 is loosened to this position where the threaded portion of the mounting screw 48 is disengaged from the internal thread of the lower screw hole 74, the head portion of the mounting screw 48 has passed through the projection 72 and the outer circumference of the head portion comes into engagement with the projection 72. Accordingly, even when the upper and lower retaining portions 70 and 73 are brought into separation from each other as shown in FIG. 7(c), there is no possibility that the mounting screw 48 may fall down from the upper retaining portion 70. Furthermore, the amount of projection of a lower end portion 48a of the mounting screw 48 from the lower surface of the upper retaining portion 70 is slight as shown in FIG. 7(c). Accordingly, in removing the upper cover 41 of the air cleaner box 60 as shown in FIG. 5, there is no possibility that the lower end portion 48a of each mounting screw 48 may interfere with the corner portion 44a of the air filter 44, thereby realizing a smooth removal/attachment operation for the upper cover 41.

While the projection 72 is a ringlike projection continuously formed on the inner wall of the cylindrical guide of the upper retaining portion 70 in this preferred embodiment, the projection 72 may be formed as a plurality of discrete projections arranged along an inner circumference on the inner wall of the cylindrical guide of the upper retaining portion 70. Further, the cylindrical guide of the upper retaining portion 70 is tapered at its upper portion toward the upper end thereof, so that even when the upper opening of the cylindrical guide of the upper retaining portion 70 is directed downward in the condition where the head portion of the mounting screw 48 is retained by the projection 72, the escape of the mounting screw 48 from the upper retaining portion 70 can be reliably prevented.

As mentioned above, the upper cover 41 is formed of synthetic resin having elasticity, so that the upper retaining portion 70 as a part of the upper cover 41 is formed of synthetic resin having elasticity. Accordingly, by elastically deforming the upper opening of the upper retaining portion 70, the mounting screw 48 can be arbitrarily removed from the upper retaining portion 70. Additionally, the lower end portion 48a of the mounting screw slightly projecting from the lower surface of the upper retaining portion 70 as shown in FIG. 7(c) has a function of facilitating the positioning of the upper retaining portion 70 in remounting the upper cover 41 onto the lower case 43, thereby contributing to a reduction in number of working steps.

The shapes or the like of the projections, the fastening portions, and the mounting screws are not limited to those shown in this preferred embodiment, but various modifications may be made. Further, the application of the mounting screw retainer structure according to the present invention is not limited to the air cleaner box as in this preferred embodiment, but this retainer structure is widely applicable to various components.

41: upper cover 43: lower case 45: fastening portion 48: mounting screw 48a: lower end portion of the mounting screw 60: air cleaner box 70: upper retaining portion 71: upper screw hole 72: projection for retaining the head portion of the mounting screw 73: lower retaining portion 74: lower screw hole

## Claims

1. A retainer structure for a mounting screw (48) with a head portion and a threaded portion for fastening separate cases (41, 43), wherein
one of said separate cases (41) is integrally formed with a screw hole (71) and a guide (70) communicating with the upper end of said screw hole (71), and
said guide (70) has an inner diameter equal to or slightly larger than the diameter of the head portion of said mounting screw (48),
**characterized in that**
a projection (72) is formed on the inner wall of said guide (70) at an upper portion thereof, and
the axial distance between said projection (72) and the lower end of said screw hole (71) is slightly smaller than the length of the threaded portion of said mounting screw (48).

2. The retainer structure according to claim 1, wherein
said projection (72) retains the head portion of said mounting screw (48) in a loosened condition of said mounting screw (48), and
the upper portion of said guide (70) is tapered so that it has an inner diameter slightly smaller than the diameter of the head portion of said mounting screw (48).

3. The retainer structure according to claim 1 or 2, wherein
said separate cases (41, 43) comprise a cover (41) and a case (43) constituting an air cleaner box (60).

4. The retainer structure according to claim 3, wherein
said air cleaner box (60) is located in a narrow space below an air bag module (20).

## Patentansprüche

1. Halteanordnung für eine Befestigungsschraube (48) mit einem Kopfbereich und einem Gewindebereich zur Befestigung einzelner Gehäuse (41, 43), worin
eines der einzelnen Gehäuse (41) einstückig mit einem Schraubenloch (71) und einer Führung (70) ausgestaltet ist, die mit dem oberen Ende des Schraubenlochs (71) in Verbindung steht, und
die Führung (70) einen Innendurchmesser aufweist, der gleich oder etwas größer ist als der Durchmesser des Kopfbereichs der Befestigungsschraube (48),
**dadurch gekennzeichnet, dass**
ein Vorsprung (72) an der Innenwand der Führung (70) in einem oberen Bereich davon ausgebildet ist und
der axiale Abstand zwischen dem Vorsprung (72) und dem unteren Ende des Schraubenlochs (71) etwas kleiner ist als die Länge des Gewindebereichs der Befestigungsschraube (48).

2. Halteanordnung gemäß Anspruch 1, worin
der Vorsprung (72) den Kopfbereich der Befestigungsschraube (48) in einem gelösten Zustand der Befestigungsschraube (48) hält und
sich der obere Bereich der Führung (70) verjüngt, so dass er einen Innendurchmesser aufweist, der etwas kleiner ist als der Durchmesser des Kopfbereichs der Befestigungsschraube (48).

3. Halteanordnung gemäß Anspruch 1 oder 2, worin
die einzelnen Gehäuse (41, 43) einen Deckel (41) und einen Behälter (43) umfassen, die ein Luftfiltergehäuse (60) bilden.

4. Halteanordnung gemäß Anspruch 3, worin
das Luftfiltergehäuse (60) in einem schmalen Raum unter einem Airbagmodul (20) angeordnet ist.

## Revendications

1. Structure de retenue pour une vis de montage (48) ayant une portion de tête et une portion filetée, destinée à fixer des boîtiers séparés (41, 43), dans laquelle
l'un desdits boîtiers séparés (41) est intégralement formé d'un trou de vis (71) et d'un guide (70) communiquant avec l'extrémité supérieure dudit trou de vis (71), et
ledit guide (70) a un diamètre intérieur égal ou légèrement supérieur au diamètre de la portion de tête de ladite vis de montage (48),
**caractérisée en ce que**
une projection (72) est ménagée sur la paroi interne dudit guide (70) sur sa partie supérieure, et
la distance axiale entre ladite projection (72) et l'extrémité inférieure dudit trou de vis (71) est légèrement inférieure à la longueur de la portion filetée de ladite vis de montage (48).

2. Structure de retenue selon la revendication 1, dans laquelle
ladite projection (72) retient la portion de tête de ladite vis de montage (48) dans une condition desserrée de ladite vis de montage (48), et
la portion supérieure dudit guide (70) est conique, de sorte qu'elle présente un diamètre interne légèrement inférieur au diamètre de la portion de tête de ladite vis de montage (48).

3. Structure de retenue selon la revendication 1 ou 2, dans laquelle
lesdits boîtiers séparés (41, 43) comprennent un couvercle (41) et un boîtier (43) constituant un boîtier de filtre à air (60).

4. Structure de retenue selon la revendication 3, dans laquelle
ledit boîtier de filtre à air (60) est situé dans un espace étroit sous un module d'airbag (20).
